# EUROPEAN PATENT APPLICATION

(11) **EP 2 611 267 A2**
(43) Date of publication of application: **03.07.2013**
(21) Application number: 12197799.5
(22) Date of filing: 18.12.2012
(51) Int. Cl.: H05B 35/00

(54) **Lamp structure capable of switching light-emitting mode**

(30) Priority: 29.12.2011 TW 100224941
(71) Applicant: Hsu, Hsiu-Yu, Taipei City (TW)
(72) Inventor: Tzeng, Jiun-chau, 112 Taipei City (TW)
(74) Representative: Ter Meer Steinmeister & Partner

(57) **Abstract**

A lamp structure capable of switching light-emitting mode includes a carrying base (1), a light-guiding pillar (2), at least one LED (3), a fluorescent lamp (4) and a control module (5). The light-guiding pillar (2) is mounted on the carrying base (1). The LED (3) is correspondingly arranged to the light-guiding pillar (2). The fluorescent lamp (4) is fixed to the carrying base (1) and surrounds an external periphery of the light-guiding pillar (2). The control module (5) is used to switch power-on or power-off of the LED (3) and the fluorescent lamp (4). Accordingly, the fluorescent lamp (4) and the LED (3) are prevented from limiting light-emitting performance with each other, such that overall light-emitting efficiency and light-emitting performance of the lamp is enhanced.

## Description

This application is based on and claims the benefit of Taiwan Application No. 100224941 filed December 29, 2011 the entire disclosure of which is incorporated by reference herein.

### BACKGROUND OF THE INVENTION

### Field of the Invention

The present invent relates to a lamp structure, in particular, a lamp structure capable of switching light-emitting mode.

### Description of Related Art

Due to advocacy of global energy-saving, energy-saving lighting lamp has become a trend. Therefore, it is based on advantages of low energy consumption and power saving, energy-saving lamps such as fluorescent lamp and LED (light emitting diode) applied to lighting purposes have become more and more popular and have gradually replaced traditional bulbs such as incandescent lamps to wide use in a variety of lighting lamps or light-emitting devices.

Since fluorescent lamps are still cheaper than LED lamps by comparing total luminous lumens, fluorescent lamps are the major civil use at present. However, current manufacturing methods of fluorescent lamps are still not suitable for dimming, it is primarily because that brightness of dimming of fluorescent lamps cannot be sufficiently low, and that service life will be reduced after fluorescent lamps are dimmed. Therefore, in an occasion of requirements of full brightness and low brightness, it is an ideal way by switching to fluorescent lamps as primary lamps so as to satisfy full brightness requirements, or to LED as secondary lamps so as to satisfy low brightness requirements.

However, similar products on the current market generally have the following drawbacks: 1) the production assembly procedure is too complicated; 2) light-emitting performance of the LED as a secondary lamp such as light-emitting angle and light-diffusing performance is limited by structures of the fluorescent lamp such that actual requirements cannot be satisfied; 3) light-emitting performance of the fluorescent lamp as the primary lamp will be affected by addition of the LED as the secondary.

In view of this, it is an improved target for endeavor of Applicant to solve the above-mentioned problems of the prior art by hard research and application of doctrines.

### SUMMARY OF THE INVENTION

One of the objectives of the present invention is to provide a lamp structure capable of switching light-emitting mode, which uses an LED emitting light via a light-guiding pillar and a fluorescent lamp surrounding an external periphery of the light-guiding pillar so as to prevent the fluorescent lamp and the LED from limiting light-emitting performance with each other such that overall light-emitting efficiency of the lamp is enhanced.

In order to achieve the above-mentioned objective, the present invention provides a lamp structure capable of switching light-emitting mode comprising a carrying base, a light-guiding pillar mounted on the carrying base, at least one LED correspondingly arranged to the light-guiding pillar, a fluorescent lamp fixed to the carrying base and surrounding an external periphery of the light-guiding pillar and a control module including a circuit board and a switching unit electrically connected to the circuit board, the circuit board being electrically connected to the LED and the fluorescent lamp, the switching unit being used to switch power-on or power-off of the LED and the fluorescent lamp.

The present invention further has the following effects:

The LED emits light via the light-guiding pillar, such that light source of the LED achieves the same horizontal position as that of the fluorescent lamp. And the fluorescent lamp surrounds the external periphery of the light-guiding pillar, so as to overcome limitation of construction of the fluorescent lamp. It improves light-emitting performance of the LED. In other words, the fluorescent lamp and the LED are prevented from limiting light-emitting performance with each other, such that overall light-emitting efficiency and light-emitting performance of the lamp is enhanced.

In addition, the light-guiding pillar is made of transparent material such that light-emitting performance of the fluorescent lamp as a primary lamp is prevented from decreasing by effect of the LED as the secondary lamp.

Further, the LED emits light via the light-guiding pillar, the light-guiding pillar and the fluorescent lamp achieve the same horizontal position, and the light-guiding pillar has an enlarged portion extending on an end thereof, so as to increase area of a light-emitting surface, such that decreased light-emitting performance of the LED as the secondary lamp by effect of the fluorescent lamp as the primary can be avoided.

Further, one or more LED on the circuit board followed with other electronic elements such as a stabilizer and a starter can be welded or adhered on the circuit board previously such that the lamp structure of the present invention has well production efficiency and assembly convenient so as to achieve effects of convenient production and assembly.

In addition, the light-emitting surface is convex surface, concave surface or plane surface such that the lamp structure of the present invention can conveniently select required light-emitting angle and light-diffusing performance of the LED so as to actually satisfy multiple application requirements. Further, in order to enhance light-diffusing performance of the LED, the light-emitting surface can be a frosted surface or coated with a light diffusing layer.

### DETAILED DESCRIPTION OF THE INVENTION

The detailed description and the technical contents of the present invention are illustrated with the accompanied drawings as follows. The accompanied drawings merely provide reference and description instead of a limit to the present invention.

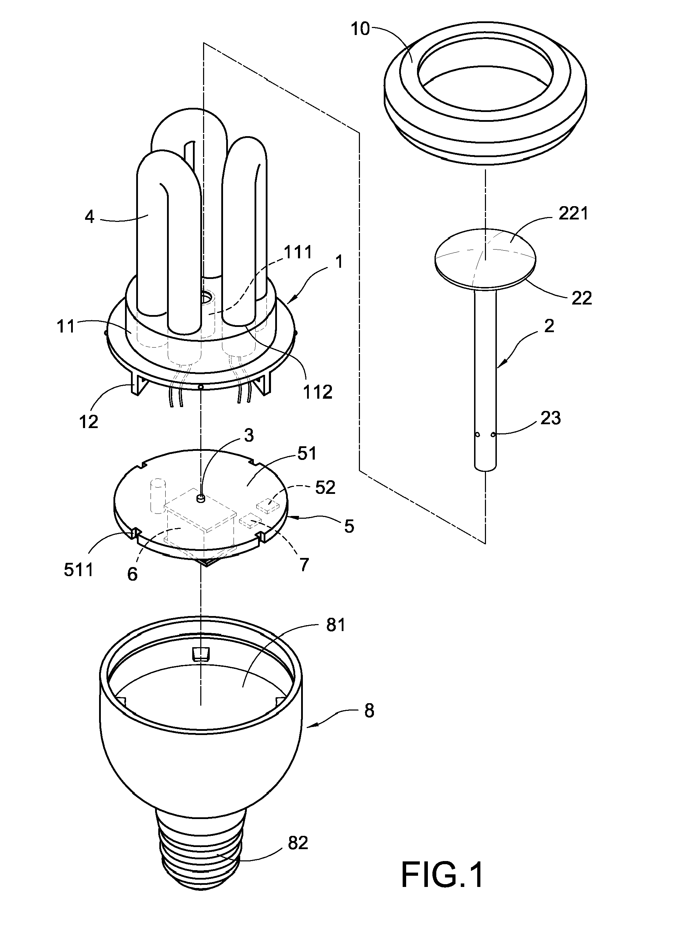

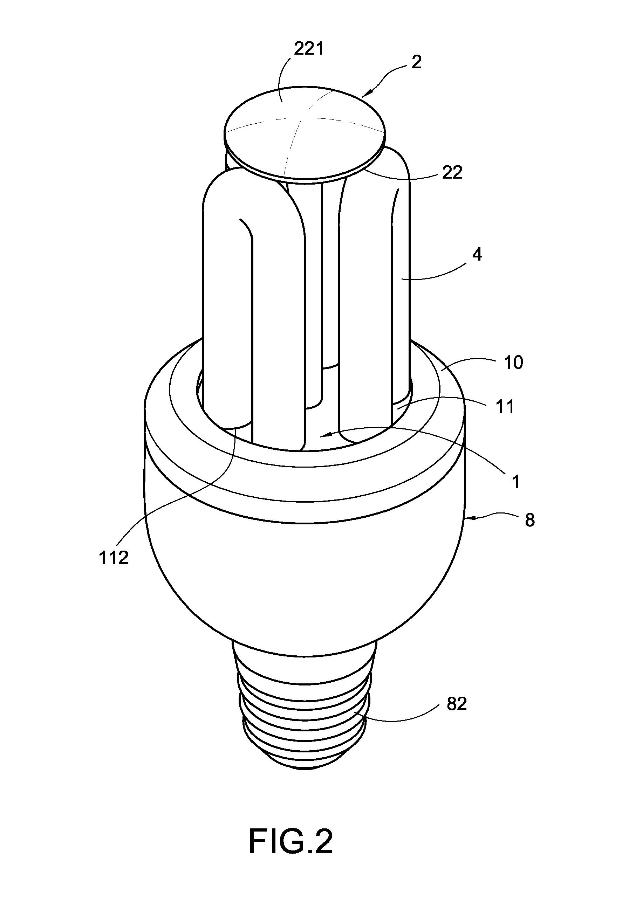

Please refer to FIGs. 1-4, the present invention provides a lamp structure capable of switching light-emitting mode. The lamp structure primarily comprises a carrying base 1, a light-guiding pillar 2, at least one LED 3, a fluorescent lamp 4 and a control module 5.

The carrying base 1 has a fixing platform 11 disposed on a side thereof and a plurality of hooks 12 extending from another side thereof in a direction away from the fixing platform 11. The hooks 12 has a chamber 13 formed on an inside thereof. The fixing platform 11 has a hollow positioning pillar 111 communicated with the chamber 13. The hollow positioning pillar 111 has a plurality of concavities 1111, and the fixing platform 11 has a plurality of inserting holes 112.

The light-guiding pillar 2 is made of transparent material. The light-guiding pillar 2 is mounted on the carrying base 1. The light-guiding pillar 2 has a groove 21 formed on an end thereof and an enlarged portion 22 outwardly extending from another end thereof. The enlarged portion 22 forms a light-emitting surface 221, and the light-emitting surface 221 is a convex surface. In addition, the light-emitting surface 221 is a frosted surface or coated with a light diffusing layer. The light-emitting surface 221 can be adjusted according to requirements rather than being limited to the above-mentioned surfaces. Further, the light-guiding pillar 2 has a plurality of latches 23. Each of the latches 23 is engaged to each of the concavities 1111 with each other.

The LED 3 is distributed on the circuit board 51. The LED 3 is correspondingly arranged to the light-guiding pillar 2. The LED 3 is accommodated in the groove 21 such that the LED emits light via the light-guiding pillar 2.

The fluorescent lamp 4 is fixed on the carrying base 1 and surrounds an external periphery of the light-guiding pillar 2. The light-guiding pillar 2 and the fluorescent lamp 4collectively fixed on the fixing platform 11. Substantially, the fluorescent lamp 4 surrounds the light-guiding pillar 2 and includes a plurality of U-shaped lamp tubes. For example, a 3U-shaped lamp tube is illustrated but not limited. Each of the U-shaped lamp tubes has two ends correspondingly inserted in two of the inserting holes 112.

The control module 5 includes a circuit board 51 and a switching unit 52 electrically connected to the circuit board 51. The circuit board 51 has a plurality of notches 511. The circuit board 51 is accommodated in the chamber 13 and electrically connected to the LED 3 and the fluorescent lamp 4. Further, the hooks 12 are correspondingly engaged with the notches 511 so as to position the circuit board 51 such that the circuit board 51 is prevented from rotating. In addition, the switching unit 52 is used to switch power-on or power-off of the LED 3 and the fluorescent lamp 4.

The present invention further comprises a stabilizer 6 (or an electronic stability device) and a starter 7 (or an electronic starting device). The stabilizer 6 and the starter 7 are mounted on the circuit board 51.

The present invention further comprises a lamp shell 8. The lamp shell 8 has an accommodation space 81. The carrying base 1 and the circuit board 51 are accommodated in the accommodation space 81. The lamp shell 8 has a lamp head 82 connected to an end thereof.

In the combination of the lamp structure capable of switching light-emitting mode of the present invention the light-guiding pillar 2 is mounted on the carrying base 1, the LED 3 is correspondingly arranged to the light-guiding pillar 2, the fluorescent lamp 4 is fixed on the carrying base 1 and surrounds the external periphery of the light-guiding pillar 2, the control module 5 includes the circuit board 51 and the switching unit 52 electrically connected to the circuit board 51, the circuit board 51 is accommodated in the chamber 13 and electrically connected to the LED 3 and the fluorescent lamp 4, and the switching unit 52 is used to switch power-on or power-off of the LED 3 and the fluorescent lamp 4. Accordingly, the LED 3 emits light via the light-guiding pillar 2, such that light source of the LED 3 achieves the same horizontal position as that of the fluorescent lamp 4. And the fluorescent lamp 4 surrounds the external periphery of the light-guiding pillar 2, so as to overcome limitation of construction of the fluorescent lamp 4. It improves light-emitting performance of the LED 3. In other words, the fluorescent lamp 4 and the LED 3 are prevented from limiting light-emitting performance with each other, such that overall light-emitting efficiency and light-emitting performance of the lamp is enhanced.

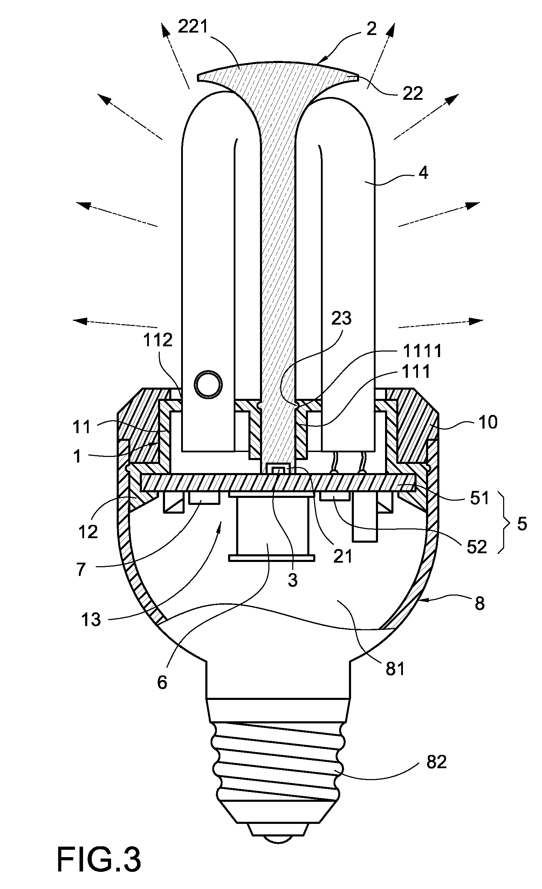

In addition, as illustrated in FIGs. 3-4, in an occasion of full brightness and low brightness requirement, users can selectively switch the LED 3 and the fluorescent lamp 4 in such a way of switching to the fluorescent lamp 4 as a primary lamp so as to satisfy full brightness requirement or switching to the LED 3 as a secondary lamp so as to low brightness requirement.

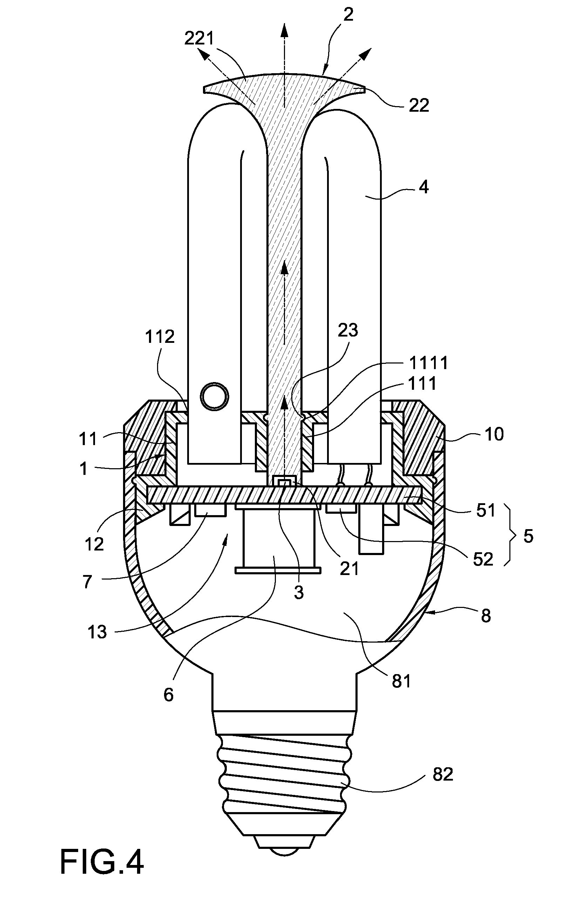

Among this, as illustrated in FIG. 3, since the light-guiding pillar 2 is made of transparent material, light-emitting performance of the fluorescent lamp 4 as the primary lamp is prevented from decreasing by effect of the LED 3 as the secondary lamp. In addition, as illustrated in FIG.4, the LED 3 emits light via the light-guiding pillar 2, the light-guiding pillar 2 and the fluorescent lamp 4 achieve the same horizontal position, and the light-guiding pillar 2 has the enlarged portion 22 extending on the end thereof, so as to increase area of the light-emitting surface 221, such that decreased light-emitting performance of the LED 3 as the secondary lamp by effect of the fluorescent lamp 4 as the primary can be avoided.

Further, one or more LED 3 on the circuit board 51 followed with other electronic elements such as a stabilizer 6 and a starter 7 can be welded or adhered on the circuit board 51 previously such that the lamp structure of the present invention has well production efficiency and assembly convenient so as to achieve effects of convenient production and assembly.

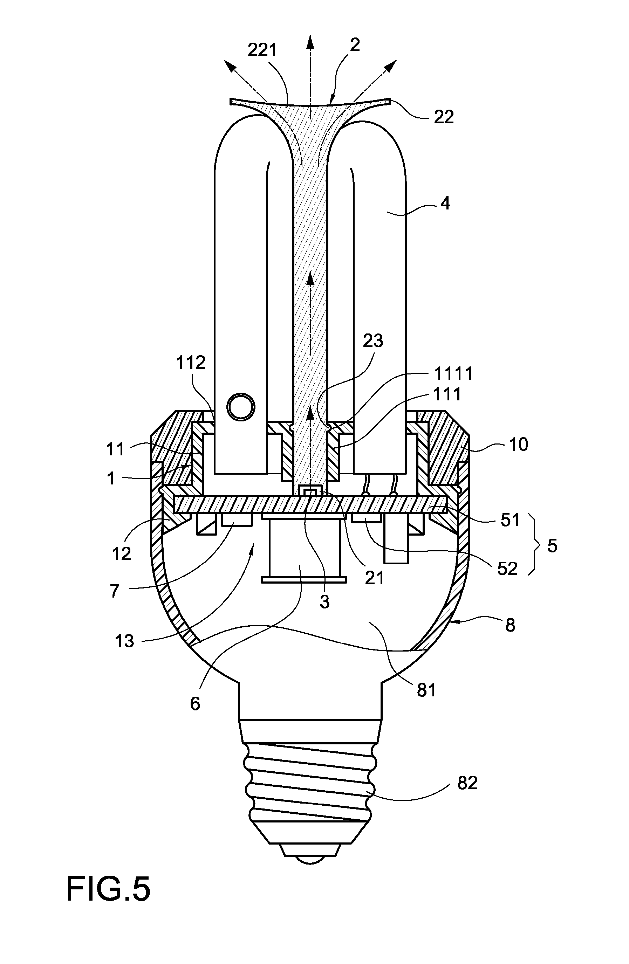

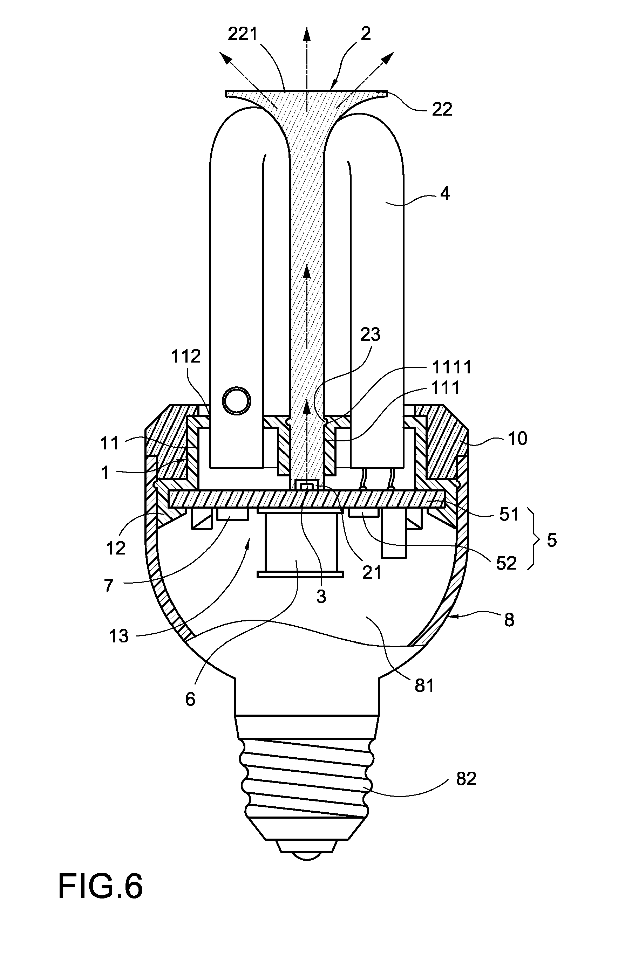

Please refer to FIGs. 5-6, FIGs. 5-6 illustrate the light-guiding pillar according to other embodiments of the present invention. As illustrated in FIG. 4, the light-emitting surface 221 is convex surface, concave surface or plane surface such that the lamp structure of the present invention can conveniently select required light-emitting angle and light-diffusing performance of the LED 3 so as to actually satisfy multiple application requirements.

Further, in order to enhance light-diffusing performance of the LED 3, the light-emitting surface 221 can be a frosted surface or coated with a light diffusing layer.

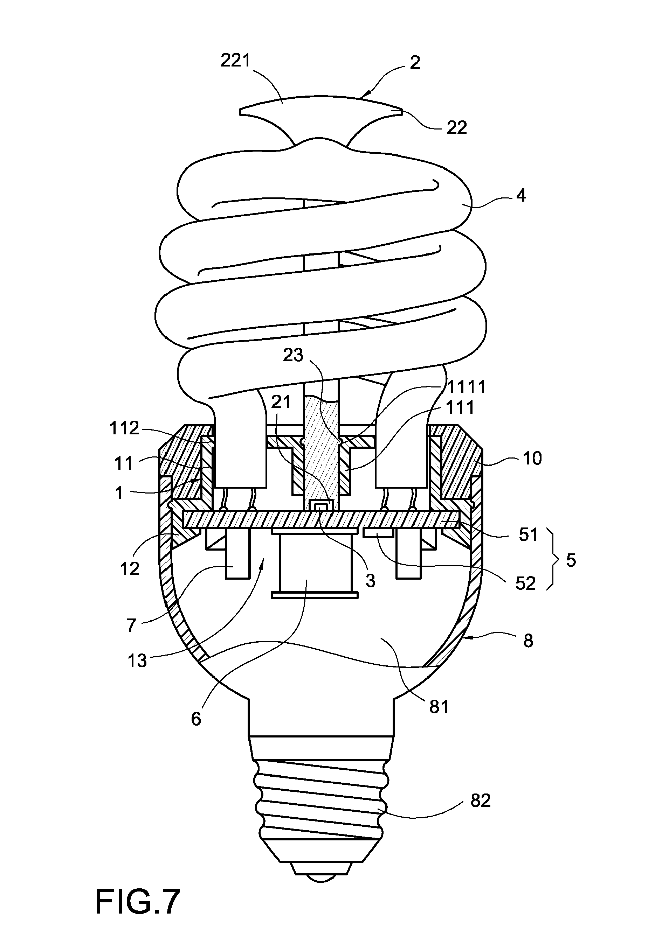

Please refer to FIG. 7, which illustrates the fluorescent lamp according to another embodiment of the present invention, the fluorescent lamp 4 surrounds the light-guiding pillar 2 and includes a hollow helical lamp tube. The fixing platform 11 has two inserting holes 112, and the hollow helical lamp tube has two ends correspondingly inserted in the two inserting holes 112.

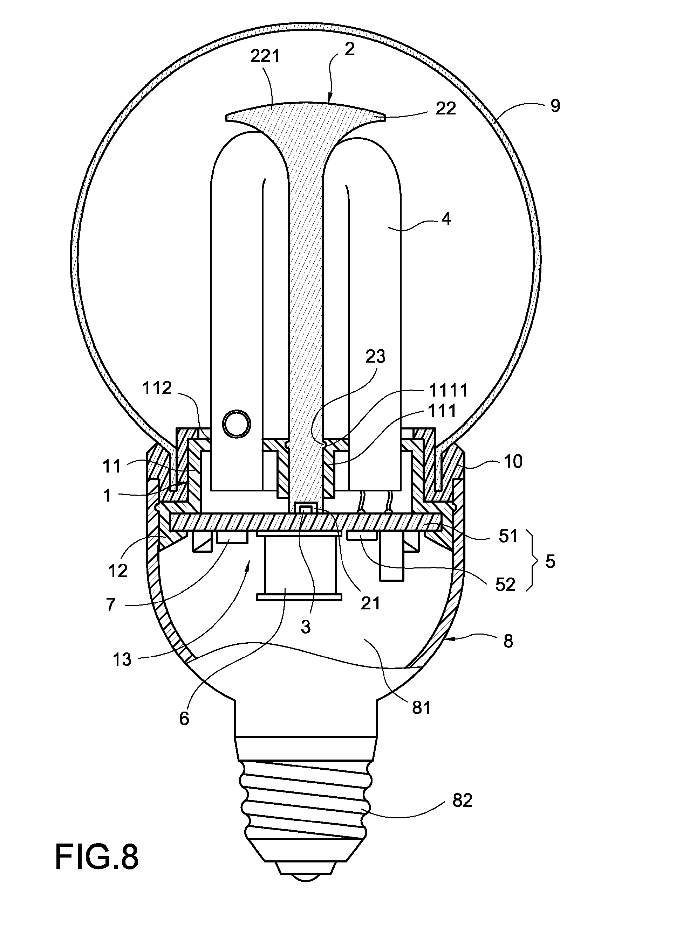

Please refer to FIG. 8, which illustrates the lamp structure according to another embodiment of the present invention, the present invention further comprises a lamp housing 9. The lamp housing 9 is connected to the lamp shell 8 and correspondingly covers the light-guiding pillar 2, the LED 3 and the fluorescent lamp 4. In addition, the present invention further comprises a coupling ring 10. The coupling ring 10 is of ring-shaped. The coupling ring 10 has two sides engaged with the lamp shell 8 and the lamp housing 9, respectively. In addition, In order to enhance light-diffusing performance of the lamp housing 9, the lamp housing 9 can be a frosted surface or coated with a light diffusing layer.

### BRIEF DESCRIPTION OF DRAWING

FIG. 1 is a perspective explosion view of a lamp structure according to the present invention.
FIG. 2 is a schematically assembly view of the lamp structure according to the present invention.
FIG. 3 is a schematically sectional view of the lamp structure according to the present invention.
FIG. 4 is another schematically sectional view of the lamp structure according to the present invention.
FIG. 5 is a schematically sectional view of a light-guiding pillar according to another embodiment of the present invention.
FIG. 6 is a schematically sectional view of the light-guiding pillar according to further embodiment of the present invention.
FIG. 7 is a schematically sectional view of a fluorescent lamp according to another embodiment of the present invention.
FIG. 8 is a schematically sectional view of the lamp structure according to another embodiment of the present invention.

## Claims

1. A lamp structure capable of switching light-emitting mode, comprising:
a carrying base (1);
a light-guiding pillar (2) mounted on the carrying base (1);
at least one LED (3) correspondingly arranged to the light-guiding pillar (2);
a fluorescent lamp (4) fixed to the carrying base (1) and surrounding an external periphery of the light-guiding pillar (2); and
a control module (5) including a circuit board (51) and a switching unit (52) electrically connected to the circuit board (51), the circuit board (51) being electrically connected to the LED (3) and the fluorescent lamp (4), the switching unit (52) being used to switch power-on or power-off of the LED (3) and the fluorescent lamp (4).

2. The lamp structure capable of switching light-emitting mode according to claim 1, wherein the carrying base (1) has a fixing platform (11) disposed on a side thereof and a chamber (13) formed on another side thereof, the light-guiding pillar (2) and the fluorescent lamp (4) are collectively fixed on the fixing platform (11), and the circuit board (51) is accommodated in the chamber (13).

3. The lamp structure capable of switching light-emitting mode according to claim 2, wherein the carrying base (1) has a plurality of hooks (12) extending in a direction away from the fixing platform (11), and the chamber (13) is formed on insides of the hooks (12).

4. The lamp structure capable of switching light-emitting mode according to claim 2, wherein the LED (3) is distributed on the circuit board (51), the light-guiding pillar (2) has a groove (21) formed on an end thereof, the fixing platform (11) has a hollow positioning pillar (111) communicated with the chamber (13), and the light-guiding pillar (2) penetrates the hollow positioning pillar (111) such that the LED (3) is accommodated in the groove (21).

5. The lamp structure capable of switching light-emitting mode according to claim 4, wherein the fluorescent lamp (4) surrounds the light-guiding pillar (2) and has a plurality of U-shaped lamp tubes, the fixing platform (11) has a plurality of inserting holes (112), and each of the U-shaped lamp tubes has two ends correspondingly inserted in two of the inserting holes (112).

6. The lamp structure capable of switching light-emitting mode according to claim 4, wherein the fluorescent lamp (4) surrounds the light-guiding pillar (2) and has a hollow helical lamp tube, the fixing platform (11) has two inserting holes (112), and the hollow helical lamp tube has two ends correspondingly inserted in the two inserting holes (112).

7. The lamp structure capable of switching light-emitting mode according to claim 4, wherein the light-guiding pillar (2) has a plurality of latches (23), the hollow positioning pillar (111) has a plurality of concavities (1111), and each of the latches (23) is engaged to each of the concavities (1111) with each other.

8. The lamp structure capable of switching light-emitting mode according to claim 1, wherein the light-guiding pillar (2) has a groove (21) formed on an end thereof and an enlarged portion (22) outwardly extending from another side thereof, and the enlarged portion (22) forms a light-emitting surface (221).

9. The lamp structure capable of switching light-emitting mode according to claim 8, wherein the light-emitting surface (221) is a plane surface.

10. The lamp structure capable of switching light-emitting mode according to claim 8, wherein the light-emitting surface (221) is a convex surface.

11. The lamp structure capable of switching light-emitting mode according to claim 8, wherein the light-emitting surface (221) is a concave surface.

12. The lamp structure capable of switching light-emitting mode according to claim 8, wherein the light-emitting surface (221) is a frosted surface.

13. The lamp structure capable of switching light-emitting mode according to claim 8, wherein the light-emitting surface (221) is coated with a light diffusing layer.

14. The lamp structure capable of switching light-emitting mode according to claim 1, further comprising a stabilizer (6) and a starter (7), the stabilizer (6) and the starter (7) being mounted on the circuit board (51).

15. The lamp structure capable of switching light-emitting mode according to claim 1, further comprising a lamp shell (8) and a lamp housing (9), the lamp shell (8) having an accommodation space (81), the carrying base (1) and the circuit board (51) being accommodated in the accommodation space (81), the lamp housing (9) being connected to the lamp shell (8) and correspondingly covering the light-guiding pillar (2), the LED (3) and the fluorescent lamp (4).
